# EUROPEAN PATENT SPECIFICATION

(11) **EP 0 525 178 B1**
(45) Date of publication and mention of the grant of the patent: **25.11.1998**
(21) Application number: 92907304.7
(22) Date of filing: 11.02.1992
(51) Int. Cl.: G01N 33/50

(54) **ELEMENTS AND METHODS EMPLOYING POLYMERIC SURFACE AMPLIFICATION AGENTS**
TESTEINHEITEN UND VERFAHREN, DIE POLYMERISCHEN OBERFLÄCHEN-VERSTÄRKUNGSAGENZIEN VERWENDEN
ELEMENTS ET PROCEDES UTILISANT DES AGENTS D'AMPLIFICATION DE SURFACE POLYMERIQUES

(30) Priority: 11.02.1991 US 653052
(43) Date of publication of application: 03.02.1993
(73) Proprietor: BIOSTAR, INC., Boulder, Co 80301 (US)
(72) Inventor: ETTER, Jeffrey, Boulder, CO 80302 (US); MAUL, Diana, Thornton, CO 80221 (US); BOGART, Greg, Fort Collins, CO 80524 (US); ZAPP, Loretta, Boulder, CO 80303 (US); PETERSON, Tammy, Broomfield, CO 80020 (US)
(74) Representative: Sexton, Jane Helen
(86) International application number: US9200808
(87) International publication number: WO9214147

(56) References cited:
- EP-A- 0 067 921
- EP-A- 0 276 142
- EP-A- 0 276 968
- EP-A- 0 396 801
- WO-A-90/11525
- US-A- 4 181 636
- US-A- 4 444 879

## Description

### FIELD OF THE INVENTION

Thin film detection methods which provide direct determination of interacting species have long been held to offer significant advantages relative to radioactive; or enzymatic whether fluorescent, luminescent, colorimetric, or other tag-dependent detection schemes. These tag dependent detection systems require extensive optimization of a large number of parameters. These parameters include, for enzymatic systems: enzyme specific activity, level of incorporation of enzyme on secondary receptive material, amount of secondary reagent in test sample, and level of substrate(s) required.

Thin film systems have suffered from a lower applicability in the detection of small molecules. Such analytes fail to produce sufficient thickness or optical density for visual or instrumented detection. Thin film detection systems perform optimally when the integrity of the film is maintained. Any method designed for amplification in such systems should provide an increase in thickness or density and maintain the film integrity as well as meet any limitations of the detection systems, and should be of the simplest possible construction.

### BACKGROUND OF THE INVENTION

### Description of the Prior Art

Reports of amplification in thin film detection systems in the prior art are limited. One amplification method describes the use of small silica particles coated with concanavalin A or an anti-lgG antibody for use in an ellipsometric assay (C. Fredrik Mandenires and K. Mosbach, Anal. Biochem., 170, 68-72, 1988). Silica particles provide a refractive index which is sufficiently close to the biological layers in the described system that the added layer serves to increase the apparent thickness of the biological layers in a concentration dependent manner. These particles being rigid in nature do not, however, maintain the integrity of the films.

U.S. Patent 4,647,544 describes an immunoassay detection system which relies on Bragg scattering. The Bragg scattering is produced by use of a grooved solid substrate or by application of the antibody in patterns. Also described is a method for increased scattering by introduction of a secondary reagent composed of an antibody and a chemically inert carrier. The preferred embodiment utilizes a metal such as gold at 5-100 nm. Metals offer significant advantages in the scattering method. Additional secondary carriers proposed were cells and highly cross-linked, rigid polystyrene latex of 20-500 nm. The requirement for this system is that the carrier provide discontinuous, discrete, point sources for scattering.

U.S. Patent 4,480,042 describes an agglutination immunoassay which relies on the attachment of antibody to high refractive index particles. The particles are constructed of a high refractive index shell or core latex polymer with a refractive index of 1.54 or greater. The outer shell provides a material suitable for the covalent attachment of the biomolecule. In this case, specifically a 0.03 to 0.1 micron particle is utilized. Again, for assessment of an agglutination reaction, the particles should provide discrete point sources for scattering. U.S. Patent 4,181,636 describes a similar agglutination immunoassay but does not require the high refractive index. The present invention describes the use of a styrene-butadiene copolymer latex with a specific gravity near water and which contains surface -COOH groups for covalent attachment of antibodies utilizing a water soluble carbodiimide. Again, the requirement for such latex particles is that they maintain their particulate character.

A wide variety of styrene-butadiene copolymers have found utility in agglutination assays, immunoassays, and chromatography applications. The latexes used are highly cross-linked, rigid copolymers. The most common use of latex particles in these applications is as the solid support for capture and separation of the desired analyte.

Styrene-butadiene copolymers with low crosslinking are frequently designated surface activators or film forming particles. These preparations behave as particles in solution but upon contact with a surface dry to a conformal film. These film forming styrene-butadiene copolymers may contain a wide variety of functional binding groups. Groups which will control the hydrophilicity of a surface have also been described (U.S. Patent 4,835,211). In addition to styrene-butadiene, these copolymers may also contain isoprene, vinyl, acrylic, methacrylic, vinyldiene chloride, and etc. These materials have found utility in agents to increase the cure rate of adhesives (U.S. Patent 3,836,377), as a binder polymer in paint formulations (U.S. Patent 4,683,269; U.S. Patent 4,391,928), as protective coatings (U.S. Patent 4,902,733; U.S. Patent 4,925,893; U.S. Patent 4,683,260; U.S. Patent 3,962,167; U.S. Patent 4,781,948; U.S. Patent 4,636,437; U.S. Patent 4,537,926; U.S. Patent 4,510,204), and in the production of toning films (U.S. Patent 4,806,451).

Rigid polystyrene particles have been used for signal generation by incorporation of a dye. These particles are simply an alternate method for the introduction of a tag or label for signal generation. Use of colored or dyed latexes for agglutination assays and for membrane based assays have been extensively utilized( for a review see L.B. Bangs, American Clinical Laboratory News, May 1990). As in previous cases, the primary requirement for these particles is that they maintain their structure for visualization in agglutination assays and do not distort to block the pores of the membrane-based tests.

A wide range of chemistries may be introduced into the polystyrene-butadiene copolymers, an excellent review of the types of functional groups which have been introduced into latexes is presented in L.B. Bangs, American Clinical Laboratory News, May 1990. Groups such as carboxylic acid, primary or aliphatic amines, aromatic amines, aniline, chloromethyl, amide, aldehyde, thiol, hydroxyl, nitrile, or epoxy have been used for the covalent attachment of receptive material or one member of interacting species to the surface of the polymer. This attachment can be accomplished through direct reaction of the functional group with the receptive material or may rely on modification of the functional group to a new reactive group with a specific desired chemistry. An example of the latter is the modification of an amide containing latex with hydrazide prior to attachment of an antibody to the latex preparation, U.S. Patent 4,421,896. While covalent attachment provides specific advantages with certain interacting species, passive adsorption of the receptive material to the latex is frequently adequate.

While latex particles or styrene-butadiene copolymers have been used as solid support for immunoassays and in some affinity chromatography applications and as the method for introduction of a tag or label, they have not been widely used in the direct generation of signal in any system beyond agglutination assays. These assays require a rigid well-defined latex particle or bead. The present invention describes the utility of film-forming latex or other film-forming particle preparations known as surface activators in the generation of a signal in thin film detection methodologies.

### SUMMARY OF THE INVENTION

This invention describes a unique method for the amplification of signals in assay systems which rely on a thin film method. Such methods include, but are not limited to, ellipsometry, interference effects, profilimetry, scanning tunneling microscopy, atomic force microscopy, interferometry, light scattering, total internal reflection, or reflectometric techniques. The materials selected for use in these types of systems must maintain some degree of particulate character in solution and must, upon contact with a surface or support, form a stable film. The film should be conformal to the test surface to maintain the desired smoothness or texture of the substrate. The characteristic texture of the surface will be dependent on the detection method employed. The material selected must also be capable of adhering, through covalent or passive interaction, a receptive material or one member of an interacting set of species. The receptive material must be adhered to the signal amplifying material or particle in a manner which preserves the reactivity and stability of the receptive species. The receptive material applied to the particle may be identical to, or matched to the receptive species immobilized on the substrate of the test surface.

It has now been found that a method of amplifying can be provided by use of surface activator components, the signal is generated by binding an analyte of interest through its receptive material from a suitable medium. The method comprises the steps of (1) providing a detection device having an optical substrate supporting at least one adhering layer, said layer capable of supporting at least one other interactive layer, then combining therewith a second interactive receptive layer-forming reagent comprising an analyte of interest and a film-forming surface activator attached to said analyte through said second interactive receptive layer in a medium, then observing and measuring the visually enhanced and discernable signal on the optical substrate. In the method, the surface activator is a film-forming latex having a specific gravity nearly the same as water and is a low cross-linked copolymer of styrene-butadiene, preferably having water soluble -COOH moieties. There are numerous methods by which the detection of the thus amplified signals can be made including ellipsometrically.

This method can be practiced using an element of the present invention which exhibits enhanced surface optical signals, that is surface activators, which originate from the interaction between an analyte of interest and at least a first and second receiving layer of material. This element comprises a substrate as will be described more fully hereafter, supporting a layer of a first receiving material upon whose surface is contacted with a mixture comprising a combination of substances including an analyte of interest and a surface-activator film-forming styrene-butadiene copolymer latex.

### DETAILED DESCRIPTION OF THE PREFERRED EMBODIMENTS

A number of different initial substrates, optical substrates, are suitable for use with this invention. These substrates include, but are not limited to, monocrystalline silicon-polished or lapped wafers, optical glasses, dark glass, metal, plastic, borosilicate glasses, etc. These substrates may be molecularly planar or may be textured to provide a property desired for the detection method employed. The initial substrate may be coated with additional materials to provide a desired physical property, such as the use of anti-reflection coatings on a silicon wafer to create an interference film for use in the direct visualization of the interaction of reactive species.

Beyond the initial substrate and the films applied to enhance the performance of the detection system, additional layers of material may be required to anchor the reactive species or receptive material to the surface of the substrate. Once the substrate is activated or treated to accept the reactive species, the receptive material may be applied by passive or covalent attachment.

Amplification is required when the size of the analyte is insufficient in and of itself to produce a signal that is directly observable with any of the thin film detection methods, or when extremely low concentration levels must be detected. The amplification method employed must maintain the thin film characteristics required for the detection technique. For maintaining the properties of the thin films the surface activator particles or the film-forming latex formulations present the properties which may be exploited. While the formulations were designed for use in paints or as protective coatings, they share the attributes of the latexes more commonly used in detection schemes for various biological materials.

In general, a thin film assay that requires amplification would consist of a substrate whose properties and characteristics are determined by the type of detection method used, optionally a secondary optical material, optionally an activation or adhering layer, a layer of receptive material, a sample of matrix appropriate to the analyte of interest, a reactive species coated film-forming particle, and any sample preparative reagents that may be required. A general assay protocol would require that the sample suspected of containing the analyte would be processed through any treatment necessary, such as extraction of a cellular antigen, and would then be mixed with the secondary or amplification reagent. An aliquot of this mixture would be applied to the receptive material coated substrate. After an appropriate incubation period, the unbound material would be separated from the reacted film by either a physical rinse/dry protocol or with a device contained rinse/dry step. The signal would then be visually or instrumentally interpreted. The introduction of the secondary or amplification film-forming particle could be by addition of a reagent to the sample, as a lyophilized material in the sample collection or application device, or embedded in an assay device.

The production of the amplifying film-forming particles requires the selection of a film-forming particle or surface activator which provides sufficient particle density, is compatible with the secondary reactive species, and is of sufficient size (in solution) to increase the apparent thickness or density of the captured analyte. The secondary receptive material coated to the surface activator, may be identical to the receptive material immobilized to the substrate, or may be complementary to the receptive material. Appropriate receptive materials include, but are not limited to, antibodies, monoclonal or polyclonal; enzymes, their substrates or inhibitors; bacterial, viral, or hormonal receptors; DNA of synthetic or natural origin; RNA of synthetic or natural origin; or any reactive species for which there exists a corresponding reactive member(s). The secondary reactive species would include any additional reactive species that reacts with the analyte without affecting the interaction of the analyte with the immobilized receptive material.

The secondary reactive species may be immobilized on the surface activator particles by incubation at the appropriate temperature for a period of time. The temperature selected will be influenced by the chemistry utilized to attach the secondary reactive species to the particle, the nature of the reactive species, and the composition of the particle. In addition to the temperature, length of incubation, chemistry of immobilization, the buffer composition (pH and ionic strength) and amount of secondary reactive material must be optimized to the particular application.

The specific examples given are intended to be representative of the type of method(s) used for the production of the film-forming amplification reagent. The conditions described are not intended as limitation in the preparation of such amplification reagents.

### EXAMPLE 1

Surface Activator particles were purchased from Bangs Laboratories, Carmel, In.; Amide Particles: Lot Numbers L910108A (SA7-015/758) or L901015J (B7-015FF/181); or Carboxylate Particles: Lot Number L9004108 (SA1-015/787). TC3, TC3X, TC7, and TC7X are similar film-forming particles which were purchased from Seradyn, Inc., Indianapolis, IN. All of the TC designated preparations were carboxylic acid containing styrene-butadiene copolymers. Of these preparations, only the TC7 particles were extensively examined. The TC3 preparations produce a very opalescent film and were not used with this detection application. Seradyn particles examined were TC-7A Product Number CML, Lot Number 1K30; TC-7X Lot Number 1M92, TC-7 Lot Number 1V18 (F040690), TC-3X Lot Number 1R35, and TC-3 Lot Number 1J44. The surface activator preparations offer more flexibility in the chemistries of immobilization as both carboxylate and amide particles are available. The amide particles are readily converted to the hydrazide particle as described in U.S. Patent 4,421,896. In this study, monocrystalline silicon, virgin test wafers were purchased from Addison Engineering, Inc., Sunnyvale, CA. These wafers were coated with a T-polymer siloxane (Petrarch Systems, Bristol, PA, Catalog Number PS401, Lot Number) by application of 300 microliters of 1:300(v/v) dilution in 2-methyl-2-butanol of the stock siloxane using a spin coating device, a technique well known to those skilled in the semiconductor art. The T-polymer was cured to the surface of the wafer by a heat treatment for 120 minutes at 120°C. The activated substrates were placed in a solution containing 20 micrograms/ml of a rabbit polyclonal antibody to Streptococcus Group A antigen (Medix Biotech, Inc., Foster City, CA, Catalog Number V-872-01R, Lot Number M-11206), in 0.1 M HEPES buffer, pH = 6.0. Wafers were submerged in the antibody solution for 60 minutes at 25°C, removed, rinsed with deionized water, and dried under a stream of nitrogen. A thickness or optical density change is directly observed by examining a reacted wafer with the Sagax Comparison Ellipsometer or other ellipsometric technique and comparison to a measurement made on the same wafer before reaction.

Table 1 summarizes the results obtained with variously coated film-forming particles. Table 1 indicates the buffer condition, the antibody concentration, particle concentration, and the addition of any blocking materials if necessary. The antibody used for coating of the film-forming particles was the same as that used as the receptive material on the ellipsometric wafer. Antibody was coated to the surface of the particle by incubation of the mixtures at 25°C for 26 hours. TC7 preparations were examined as dilutions of the stock solutions, dialyzed against water prior to antibody treatment, and treated with a mixed bed resin prior to reaction with antibody. Covalent attachment of the antibody was examined with the carboxylate particles by the addition of a 1% final concentration (w/v) of a carbodiimide (1-cyclohexyl-3-(2-morpholinoethyl-carbodiimide metho-p-toluenesulfonate; Aldrich Chemical, Co., Milwaukee, WI, Catalog Number C10,640-2, Lot Number 09915PW). The carbodiimide was added prior to the addition of the antibody. Hydrazide treated amide particles were treated with a final concentration of 0.05% glutaraldehyde immediately before the addition of antibody to provide covalent attachment of the antibody onto the surface of the particle. Particles were coated with antibody in a 0.01 M Phosphate Buffered Saline at pH = 7.2 unless otherwise denoted.

The Strep A antigen preparation used for the production of the positive control was purchased from Medix Biotech. This antigen was diluted into a mixture of one part 2M NaNO₂, one part 2M Acetic Acid, and one part 0.66N NaOH to a 1:600 dilution level. The same preparation minus the antigen was used as the negative control. The secondary amplifying reagent was mixed in varying ratios, as designated in Table 1, with the positive and negative controls and five microliters were applied to the surface of the antibody coated wafer. The samples were incubated for 2 minutes at 25°C, rinsed, and then dried under a stream of nitrogen. Reacted wafers were examined with the Sagax Ellipsometer and thickness as a change in intensity and measured in millivolts, was recorded.

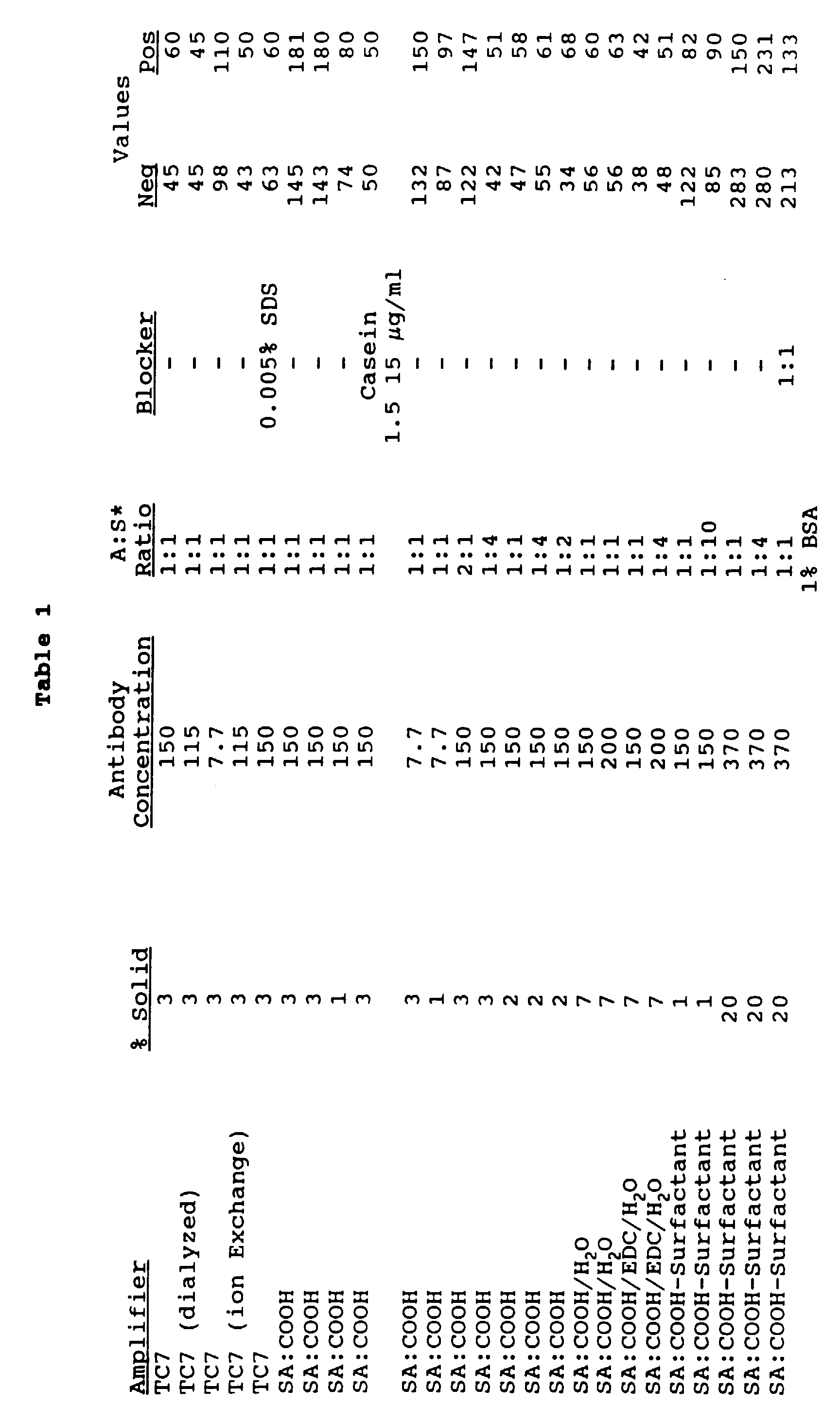

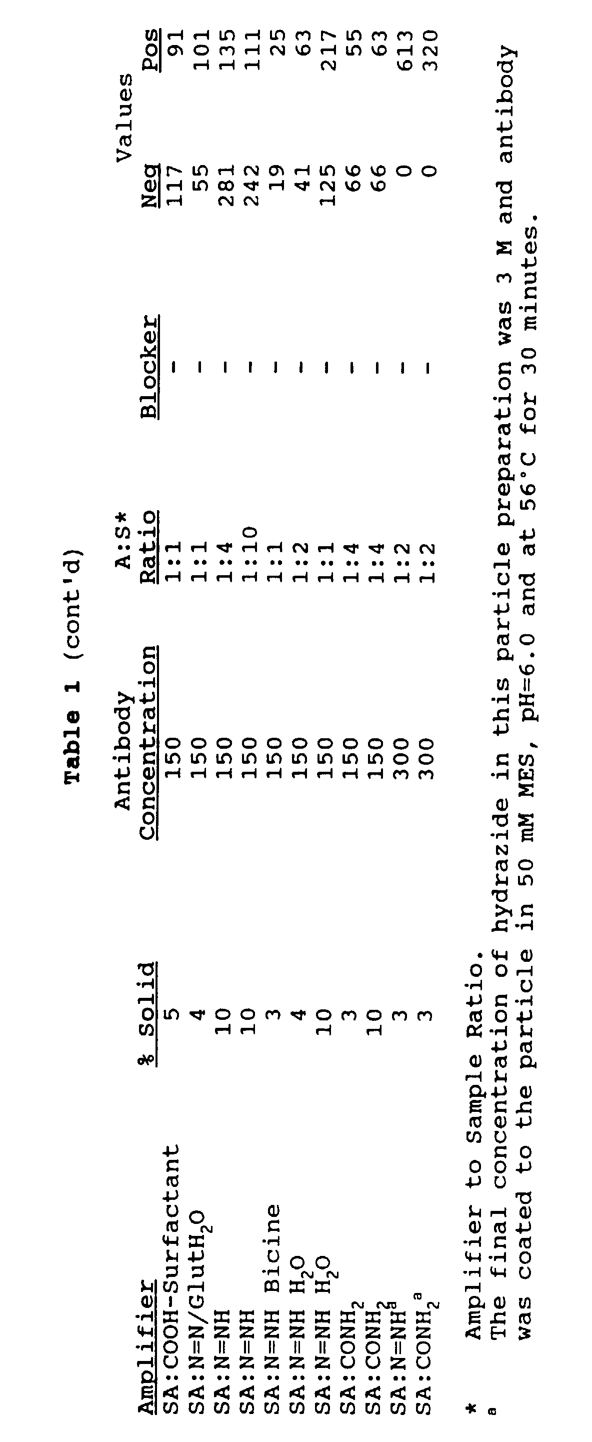

These data demonstrate that an extremely high particle density in the amplifying reagent introduces a non-specific association of that reagent with the test surface. Addition of ancillary proteins or surfactant do not improve the performance of the antibody coated particles. The TC-7 particles being slightly more rigid than the Surface Activators do not perform as well for this particular application, however, in comparison with more traditional latex preparations the TC-7 particles demonstrate significant reactivity. Increased temperature appears to improve the level of antibody incorporation into the particle and thus reduces the level of free antibody. While free antibody was not removed from these particles, it may be advantageous to remove unassociated antibody by a technique such as ultra-filtration. The hydrazide derivatized amide particles appear to provide the best overall reactivity although the amide particles also perform well. The surface activator carboxylate particles do not perform as well as the amide particles.

### EXAMPLE 2

In this study, the amplifying film-forming particles were prepared as in Example 1, and the assay was conducted as described above. However, in these experiments, a visually interpretable substrate was coated with the antibody to Strep Group A antigen. The substrate employed was a monocrystalline silicon wafer which was lapped with 12-20 micron aluminum oxide particles, mean particle size 15 microns, to create a rough textured surface using a process well known to those skilled in the semiconductor industry. This substrate is coated with a thin film of silicon nitride by any number of different deposition techniques, known to those skilled in the art. The optical coating requirements are that a film of the optical material be very uniformly applied to a tolerance much higher than traditionally required for semiconductor processes. A silicon nitride film of 350 to 550 Å is standard for this application, however, any film thickness can be utilized. Silicon nitride is not the only material that is suitable for this application. The T-polymer treatment of the optical slide was as described above. These results support the observations made in the ellipsometric system. A very high particle density provides for a clean negative, but does not generate a strong visual signal. A higher level of antibody incorporation into the particle produces a stronger signal than does a lower level of antibody. This study suggests that insufficient antibody coverage of the particle also allows for non-specific association of the particle with the test surface. A dilution of the positive control to 1:64 is clearly resolved from the negative control.

**Table 2**

| Amplifier | % Solid | Antibody Concentration | A:S* Ratio | Visual Neg | Response Positive |
|---|---|---|---|---|---|
| SA:N=NH H₂O | 10 | 150 | 1:1 | - | + |
| SA:N=NH H₂O | 10 | 150 | 1:1 | - | + |
| SA:N=NH H₂O | 10 | 150 | 1:2 | - | + |
| SA:N=NH H₂O | 10 | 150 | 1:3 | - | + |
| SA:N=NH H₂O | 10 | 150 | 1:4 | - | ++ |
| SA:N=NH H₂O | 10 | 150 | 1:5 | - | +/- |
| SA:N=NH H₂O | 3 | 150 | 1:1 | +/- | ++ |
| SA:N=NH H₂O | 3 | 150 | 1:5 | +/- | + |
| SA:N=NH^{a} | 3 | 300 | 1:2 | - | +++ |
| SA:CONH₂^{a} | 3 | 300 | 1:2 | - | ++ |

| | | | | | |
|---|---|---|---|---|---|
| * Amplifier to Sample Ratio. | | | | | |
| ^{a} Final hydrazide concentration is 3 M and antibody is added to the particles in 50 mM MES, pH = 6.0 at 56°C for 30 minutes. A 2.5M MOPS was used as the neutralizer in these experiments to provide a final pH of 8.0. | | | | | |

### EXAMPLE 3

In this study, the ellipsometric surfaces used were those described in Example 1. The system examined was designed to detect the thrombin/anti-thrombin III (AT-III) complex in human plasmas. A polyclonal anti-thrombin and a polyclonal anti-ATIII (Dako Corporation, Santa Barbara, CA) were used for the production of test surfaces and amplifying reagent, respectively. The T-polymer ellipsometric surface was coated with 20 µg/ml of the anti-thrombin antibody in a 0.1 M Na₂HPO₄ buffer at pH = 3.0.

### Secondary or Amplifying Reagent Preparation

This secondary antibody reagent was produced using a modification of the attachment protocol described in Examples 1 and 2 for the hydrazide derivatized surface activators and requires the incubation of the particle at final density in water of 0.8% particle with 70 µg/ml of anti-AT III antibody.

### Assay Run Protocol

Standards were prepared by reconstitution of the purified Thrombin Anti-Thrombin III complex in normal human plasma and then dilution with that plasma in four-fold dilutions to produce the standards for the range examined. Standards were then diluted 1:10 with normal saline. These solutions were mixed 1:1 with the secondary reagent and 10 microliters were applied to the anti-thrombin coated surface. The spots were incubated for 5 minutes at room temperature (25°C), then rinsed with deionized water and dried under a stream of nitrogen. These reacted slides were evaluated with a modification of the Sagax Comparison Ellipsometer which allowed acquisition of the data with a Compaq 386 computer. Samples values were extrapolated from the standard curves, Table 3.

**Table 3**

| **TAT Plasma Standard Curve** | | | |
|---|---|---|---|
| Concentration* (ng/ml) | Ellipsometric Value (mV) | Average mV Value | CV(%) |
| 3.3 | 0.0, 0.0, 0.2 | 0.1 +/- 0.1 | |
| 4.46 | 25.6, 25.4, 25.5 | 25.5 +/- 0.1 | <0.1% |
| 7.93 | 26.9, 27.1, 28.6 | 27.5 +/- 0.9 | 3.4% |
| 21.8 | 70.4, 62.4, 70.9 | 67.9 +/- 4.8 | 7.0% |
| 77.3 | 91.0, 99.0, 81.3 | 90.4 | 9.8% |

| | | | |
|---|---|---|---|
| * The normal plasma was demonstrated to have a value of 3.3 ng/ml based on a commercially available ELISA kit. This residual TAT concentration was added to the standard levels to provide accurate standard concentrations. | | | |

For comparison with the preferred amplifying reagent, a 70 µg/ml dilution of the anti-ATIII antibody was prepared in a commercially available conjugate diluent and examined with the plasma controls described above. Diluted antibody was mixed with the sample 1:1 as previously described. The assay conditions and procedure were constant. Plasmas were used without dilution.

**Table 4**

| Concentration (ng/ml) | Ellipsometric Value (mV) |
|---|---|
| 3.3 | 0.0 |
| 4.46 | 5.0 |
| 40.3 | 58.0 |

Very little resolution or dynamic range was obtained by use of the secondary antibody at the same concentration as was incorporated into the amplifying reagent. The performance of the amplifying reagent provides more consistent resolution of the standards. Saturation was reached for any concentration beyond the final concentration given in Table 4.

Dilutions of 24 µg/ml and 48 µg/ml of an anti-ATIII antibody conjugated HorseRadish Peroxidase (HRP) were made in conjugate diluent. The plasma standards were mixed with the diluted conjugate preparations 1:1 and the assay protocol described above utilized. Table 5 shows representative assay performance for the 24 µg/ml conjugate and Table 6 for the 48 µg/ml, respectively. While slightly improved resolution is obtained with the conjugate preparations, the dynamic range is not achieved and the system saturates at concentrations above those given in the tables.

**Table 5**

| Concentration (ng/ml) | Ellipsometric Value (mV) |
|---|---|
| 3.3 | 5.8 |
| 3.9 | 8.7 |
| 4.5 | 9.0 |
| 7.9 | 12.9 |
| 12.6 | 13.7 |
| 21.8 | 20.1 |

**Table 6**

| Concentration (ng/ml) | Ellipsometric Value (mV) |
|---|---|
| 3.9 | 0.0 |
| 4.5 | 12.4 |
| 5.6 | 18.5 |
| 7.9 | 20.8 |
| 12.6 | 23.9 |
| 21.8 | 32.0 |
| 40.3 | 37.3 |

### EXAMPLE 4

Secondary reagents were prepared by coupling either Key Hole Limpet Hemacynanin (KLH) or Ferritin to a polyclonal anti-Strep A antibody. Methods for conjugation of an antibody to KLH or Ferritin or any other protein are known to those skilled in the art. KLH should increase the signal due to its large size (MW = 1,000,000 daltons). Ferritin is a large molecule but should have relatively high refractive index due to the 10 molecules of iron each molecule of Ferritin may carry. A high refractive index particle could impact the visual detection system described in Example 2. Anti-Strep A antibody was coated to the Interference Slides as described in Example 2. The assay protocol described in Example 2 was followed but the extraction protocol used 2.5 M Trizma as the neutralizing reagent and the antigen preparation was from a different commercial source. Sample was mixed 1:1 with the secondary reagent. Visual signals generated at all ratios of sample to secondary reagent tested were extremely weak and difficult to interpret. The residual background signal made interpretation of a dilution of the neat positive control impossible to resolve from the negative control.

**Table 7**

| Secondary Reagent | Visual Response Negative | Visual Response Positive |
|---|---|---|
| KLH | +/- | + |
| Ferritin | +/- | + |

### EXAMPLE 5

The surface activator amide particles, hydrazide treated as in Example 2, were treated with a dye which would impart a blue color to the particles. Excess dye was removed from the particles by dialysis and a 0.8% final solid preparation was reacted with the Medix anti-Strep A antibody for 30 minutes at 56°C, at a final antibody concentration of 75.0 µg/ml. Standards used in this study were as described in Example 4. The neutralizer used in this study was 2.5M MOPS to achieve a final pH of 8.0. Visual impression of the neat positive standard is comparable to that obtained with the initial surface activator hydrazide particle. Some slight level of non-specific binding was observed with the dyed SA/Hydrazide particle.

While various forms and modifications of the invention have been disclosed, it will be appreciated that the invention is not limited thereto but encompasses all expedients and variations falling within the scope of the claims.

## Claims

1. Method for detecting an analyte of interest, comprising the steps of providing a detection device comprising an optical substrate supporting one or more layers comprising an adhering layer to which is affixed a receptive material which specifically interacts with said analyte of interest,
the adhering layer being between the receptive material and the substrate,
reacting said device with a sample potentially comprising said analyte under conditions in which said analyte binds to said receptive material, and
reacting bound analyte with a reagent comprising a film-forming styrene-butadiene copolymer latex which reaction creates a change in thickness or optical density on the surface of said device.

2. The method of claim 1, wherein reacting said bound analyte with said reagent creates a thickness change on the surface of said device.

3. The method of claim 1, wherein reacting said bound analyte with said reagent creates an optical density change on the surface of said device.

4. The method of claim 1, wherein said device comprises a substrate of planar reflective material supporting an attached layer of immunologically active material.

5. The method of claim 1, wherein the substrate and the attached layer polarize radiation ellipsometrically upon reflection.

6. The method of claim 1, wherein the substrate and the attached layer generate a signal which is analyzed by comparison ellipsometry.

7. The method of claim 1, wherein the substrate and the attached layer generate a signal and said signal is analyzed by an instrument selected from the group consisting of profilometers, reflectometers, scanning tunneling microscopes, atomic force microscopes, or interferometers.

8. The method of claim 1, wherein said latex is covalently attached to a secondary receptive material specific to the analyte of interest.

9. The method of claim 1, wherein said latex is passively adhered to a secondary receptive material specific to the analyte of interest.

10. The method of claim 1, wherein said analyte of interest is sandwiched between a receptive material and a secondary reactive species.

11. The method of claim 10, wherein said receptive material comprises a specific binding partner for said analyte.

12. The method of claim 10, wherein said receptive material is formed from the group consisting of antibodies, oligonucleotides, enzymes, enzyme substrates, enzyme inhibitors, bacteria, nucleic acids, viruses, hormones and receptors for said materials.

13. The method of claim 10, wherein the analyte of interest is the Strep Group A antigen.

14. Kit for an optical assay for an analyte of interest comprising:
a detection device comprising an optical substrate supporting one or more layers comprising an adhering layer to which is affixed a receptive material which specifically interacts with said analyte, and
a reagent comprising a film-forming styrene-butadiene copolymer latex and which is adapted to react with said analyte bound to said substrate to alter the thickness or optical density on said surface.

## Patentansprüche

1. Verfahren zum Nachweisen eines Analyts von Interesse, umfassend die folgenden Schritte: Bereitstellen einer Nachweisvorrichtung, enthaltend ein optisches Substrat, das eine oder mehrere Schichten trägt, zu denen eine Haftschicht zählt, an die ein rezeptives Material angeheftet ist, welches spezifisch mit diesem Analyt von Interesse wechselwirkt,
wobei die Haftschicht zwischen dem rezeptiven Material und dem Substrat liegt,
Umsetzen dieser Vorrichtung mit einer Probe, die dieses Analyt potentiell enthält, unter Bedingungen, bei denen dieses Analyt an das rezeptive Material bindet, und
Umsetzen des gebundenen Analyts mit einem Reagenz, umfassend einen filmerzeugenden Styrol-Butadien-Copolymerlatex, welche Reaktion eine Veränderung bei der Dicke oder optischen Dichte auf der Oberfläche der Vorrichtung bewirkt.

2. Verfahren nach Anspruch 1, wobei das Umsetzen dieses gebundenen Analyts mit diesem Reagenz eine Dickenveränderung auf der Oberfläche der Vorrichtung bewirkt.

3. Verfahren nach Anspruch 1, wobei das Umsetzen dieses gebundenen Analyts mit diesem Reagenz eine Veränderung der optischen Dichte auf der Oberfläche der Vorrichtung bewirkt.

4. Verfahren nach Anspruch 1, wobei die Vorrichtung ein Substrat aus planarem reflektivem Material umfaßt, das eine anhaftende Schicht aus immunologisch aktivem Material trägt.

5. Verfahren nach Anspruch 1, wobei das Substrat und die anhaftende Schicht die Strahlung nach Reflexion ellipsometrisch polarisieren.

6. Verfahren nach Anspruch 1, wobei das Substrat und die anhaftende Schicht ein Signal erzeugen, welches durch vergleichende Ellipsometrie analysiert wird.

7. Verfahren nach Anspruch 1, wobei das Substrat und die anhaftende Schicht ein Signal erzeugen und dieses Signal durch ein Instrument analysiert wird, das gewählt ist aus der Gruppe, bestehend aus Profiltastschnittgeräten, Reflexionsmessern, Raster-Tunnelmikroskopen, Atomkraftmikroskopen oder Interferometern.

8. Verfahren nach Anspruch 1, wobei dieser Latex an ein zweites rezeptives Material, das für das Analyt von Interesse spezifisch ist, kovalent gebunden wird.

9. Verfahren nach Anspruch 1, wobei dieser Latex an ein zweites rezeptives Material, das für das Analyt von Interesse spezifisch ist, passiv gebunden wird.

10. Verfahren nach Anspruch 1, wobei dieses Analyt von Interesse zwischen ein rezeptives Material und eine zweite reaktive Spezies eingebracht wird.

11. Verfahren nach Anspruch 10, wobei dieses rezeptive Material einen spezifischen Bindungspartner für dieses Analyt umfaßt.

12. Verfahren nach Anspruch 10, wobei dieses rezeptive Material aus der Gruppe gebildet wird, bestehend aus Antikörpern, Oligonukleotiden, Enzymen, Enzymsubstraten, Enzyminhibitoren, Bakterien, Nukleinsäuren, Viren, Hormonen und Rezeptoren für diese Materialien.

13. Verfahren nach Anspruch 10, wobei das Analyt von Interesse ein Gruppe-A-Streptokokken-Antigen ist.

14. Analysensatz für einen optischen Assay für ein Analyt von Interesse, umfassend:
eine Nachweisvorrichtung, enthaltend ein optisches Substrat, das eine oder mehrere Schichten trägt, zu denen eine Haftschicht zählt, an die ein rezeptives Material angeheftet ist, welches spezifisch mit diesem Analyt wechselwirkt, und
ein Reagenz, umfassend einen filmerzeugenden Styrol-Butadien-Copolymerlatex, welches geeignet ist zum Reagieren mit diesem an dieses Substrat gebundenen Analyt, um die Dicke oder optische Dichte auf der Oberfläche zu verändern.

## Revendications

1. Procédé de détection d'un analyte d'intérêt, comprenant les étapes consistant à founir un dispositif de détection comprenant un substrat optique supportant une ou plusieurs couches comprenant une couche d'adhérence à laquelle est fixée un matériau récepteur qui interagit spécifiquement avec ledit analyte d'intérêt,
la couche d'adhérence étant située entre le matériau récepteur et le substrat,
à faire réagir ledit dispositif avec un échantillon contenant potentiellement ledit analyte, dans des conditions dans lesquelles ledit analyte se lie audit matériau récepteur, et
à faire réagir l'analyte lié avec un réactif comprenant un latex filmogène du copolymère styrène-butadiène, ladite réaction créant une variation d'épaisseur ou de densité optique à la surface dudit dispositif.

2. Procédé selon la revendication 1, dans lequel la réaction dudit analyte lié avec ledit réactif crée une variation d'épaisseur à la surface dudit dispositif.

3. Procédé selon la revendication 1, dans lequel la réaction dudit analyte lié avec ledit réactif crée une variation de densité optique à la surface dudit dispositif.

4. Procédé selon la revendication 1, dans lequel ledit dispositif comprend un substrat en un matériau plan réfléchissant, supportant une couche liée, d'une substance immunologiquement active.

5. Procédé selon la revendication 1, dans lequel le substrat et la couche liée polarisent le rayonnement de façon ellipsométrique par suite de la réflexion.

6. Procédé selon la revendication 1, dans lequel le substrat et la couche liée générent un signal qui est analysé par ellipsométrie comparative.

7. Procédé selon la revendication 1, dans lequel le substrat et la couche liée génèrent un signal et ledit signal est analysé par un instrument choisi dans le groupe constitué par les profilomètres, les réflectomètres, les microscopes à balayage à effet tunnel, les microscopes à force atomique ou les interféromètres.

8. Procédé selon la revendication 1, dans lequel ledit latex est lié par covalence à un matériau récepteur secondaire, spécifique de l'analyte d'intérêt.

9. Procédé selon la revendication 1, dans lequel ledit latex adhère de manière passive à un matériau récepteur secondaire, spécifique de l'analyte d'intérêt.

10. Procédé selon la revendication 1, dans lequel ledit analyte d'intérêt est pris en sandwich entre un matériau récepteur et une espèce réactive secondaire.

11. Procédé selon la revendication 10, dans lequel ledit matériau récepteur comprend un partenaire de liaison spécifique pour ledit analyte.

12. Procédé selon la revendication 10, dans lequel ledit matériau récepteur est formé par un membre du groupe constitué par les anticorps, les oligonucléotides, les enzymes, les substrats d'enzymes, les inhibiteurs d'enzymes, les bactéries, les acides nucléiques, les virus, les hormones et les récepteurs desdits matériaux.

13. Procédé selon la revendication 10, dans lequel l'analyte d'intérêt est l'antigène du Groupe Strep A.

14. Kit pour une analyse optique d'un analyte d'intérêt, comprenant :
un dispositif détecteur comprenant un substrat optique supportant une ou plusieurs couches comprenant une couche d'adhérence à laquelle est fixé un matériau récepteur qui interagit spécifiquement avec ledit analyte, et
un réactif comprenant un latex filmogène du copolymère styrène-butadiène et qui est adapté pour réagir avec ledit analyte lié audit substrat de façon à modifier l'épaisseur ou la densité optique de ladite surface.
